(19) Europäisches Patentamt

European Patent Office

Office européen des brevets

(11) **EP 1 230 188 B1**

(12) **EUROPEAN PATENT SPECIFICATION**

(45) Date of publication and mention of the grant of the patent:
**17.09.2003 Bulletin 2003/38**

(51) Int Cl.⁷: **C03C 17/34**, C03C 17/245, C03C 17/25

(21) Application number: **00969926.5**

(22) Date of filing: **19.10.2000**

(86) International application number:
**PCT/JP00/07307**

(87) International publication number:
**WO 01/028949 (26.04.2001 Gazette 2001/17)**

(54) **GLASS SHEET WITH METAL OXIDE FILM, METHOD OF MANUFACTURING THE SAME, AND DOUBLE-GLAZING UNIT USING THE SAME**

GLASSCHEIBE MIT EINEM METALLOXIDFILM, VERFAHREN ZU DEREN HERSTELLUNG, UND DOPPELVERGLASUNGSEINHEIT UNTER VERWENDUNG DERSELBEN

FEUILLE DE VERRE A FILM D'OXYDE METALLIQUE, SON PROCEDE DE PRODUCTION ET UNITE A DOUBLE VITRAGE L'UTILISANT

(84) Designated Contracting States:
**GB**

(30) Priority: **20.10.1999 JP 29761099**

(43) Date of publication of application:
**14.08.2002 Bulletin 2002/33**

(73) Proprietor: **Nippon Sheet Glass Co., Ltd.**
**Osaka-shi, Osaka 541-8559 (JP)**

(72) Inventors:
• **NORIMATSU, Hodaka,**
**Nippon Sheet Glass Co., Ltd**
**Osaka 541-0045 (JP)**
• **FUJISAWA, Akira, Nippon Sheet Glass Co., Ltd**
**Osaka 541-0045 (JP)**
• **HIRATA, Masahiro, Nippon Sheet Glass Co., Ltd**
**Osaka 541-0045 (JP)**

(74) Representative: **Towler, Philip Dean**
**Frank B. Dehn & Co.,**
**European Patent Attorneys,**
**179 Queen Victoria Street**
**London EC4V 4EL (GB)**

(56) References cited:
| | |
|---|---|
| **EP-A- 0 983 972** | **EP-A- 1 036 774** |
| **EP-A- 1 038 849** | **GB-A- 2 302 102** |
| **US-A- 3 531 313** | **US-A- 5 897 957** |

**Description**

TECHNICAL FIELD

The present invention relates to a glass sheet with a metal oxide film suitable as, for example, window glass for vehicles and buildings and antistatic glass for display panels, a method of manufacturing the same, and a double-glazing unit using this glass sheet with a metal oxide film.

BACKGROUND ART

Solar control glass that suppresses the transmission of heat rays from the sun and decreases a cooling load and a degree of sensed heat, and low-emissivity glass that decreases a heating load and prevents condensation have been used for windows of buildings and vehicles. In many cases, the low-emissivity glass is used for a double-glazing unit. As the solar control glass or the low-emissivity glass, a glass sheet with a metal oxide film such as a tin oxide film or the like formed on a glass sheet has been known. Similarly, as antistatic glass for preventing dust and dirt from adhering to the surface of a display panel, a glass sheet with a metal oxide film such as a tin oxide film formed as a transparent conductive film has been used. In some cases, the tin oxide film may be doped with fluorine or antimony for improvement in conductivity.

Since the tin oxide film is a polycrystalline film, roughness is caused at the film surface as the film grows. When such a film is used for a substrate of a solar cell, this roughness exhibits a light trapping effect that can improve photoelectric conversion efficiency. Conventionally, therefore, various studies have been conducted with respect to the surface profile of the tin oxide film. For instance, JP 2-503615 A discloses a surface profile having convex portions with diameters of 0.1 to 0.3 $\mu$m and ratios of height/diameter of 0.7 to 1.2. Further, for example, JP 4-133360 A discloses a surface profile having truncated pyramidal or pyramidal convex portions with heights of 100 to 300 nm.

However, when a film having such roughness as is conspicuous to the above-mentioned degree is used for a window or a display panel, there has been a problem that because of the scattering of transmitted light, landscape seen through the window looks hazy or a display of the display panel is unclear. In addition, there also has been a problem that dirt adheres to the concave and convex portions and is difficult to remove. When the film thickness is reduced to restrict crystal growth, the roughness at the film surface is reduced. However, a sufficient solar control property, low emissivity, conductivity, or the like cannot be obtained merely by the reduction in film thickness.

GB-A-2 302 102, US-A-3 531 313, EP-A-1 038 848 (publ. 27.09.2000) and EP-A-983 972 (publ. 08.03.2000) all describe glass sheets with metal oxide films in which the outer layer is an antimony or fluorine doped tin oxide layer with a thickness of at least 100 nm.

DISCLOSURE OF THE INVENTION

The present invention is intended to provide a glass sheet with a metal oxide film in which roughness at the film surface is suppressed while a layer is formed, wherein the film includes tin oxide as a main component and has a thickness required for obtaining desired characteristics with respect to the solar control property, low emissivity, conductivity, or the like. Furthermore, the present invention also is intended to provide a method of manufacturing this glass sheet with a metal oxide film, and a double-glazing unit using this glass sheet.

In order to achieve the aforementioned objects, the glass sheet with a metal oxide film of the present invention is characterized as defined in claims 1 and 3. A metal oxide film including at least one layer containing tin oxide as the main component is formed on the surface of a glass sheet. The total thickness of the at least one layer containing tin oxide as the main component is at least 150 nm. A layer of the at least one layer containing tin oxide as the main component, located furthest from the glass sheet, contains at least one selected from fluorine and antimony. An arithmetical mean roughness $Ra$ of the surface of the metal oxide film is 10 nm or less.

In the glass sheet with a metal oxide film of the present invention, the arithmetical mean roughness Ra of the film surface is suppressed to be 10 nm or less while the total thickness of the at least one layer containing tin oxide as the main component is at least 150 nm. In the present specification, the arithmetical mean roughness $Ra$ is calculated in accordance with the prescription of Japanese Industrial Standard (JIS) B0601. In addition, the "main component" denotes a component accounting for at least 50 wt% of the whole amount.

In one embodiment the concentration of the fluorine in the layer located furthest from the glass sheet (hereinafter, referred to as an "outermost layer") of the at least one layer containing tin oxide as the main component is in the range between 0.5 wt% and 2 wt%. In the other embodiment, when being indicated by a mole ratio (Sb / Sn) of antimony (Sb) to tin (Sn), the concentration of the antimony in the outermost layer is in the range of $0.05 \leq Sb / Sn \leq 0.2$.

For instance, it is preferable that the glass sheet with a metal oxide film of the present invention has a visible light transmittance in the range between 15% and 55% and a solar light transmittance (a solar radiation transmittance) in the range between 10% and 50%. This glass sheet with a metal oxide film is suitable as solar control glass. Furthermore, it is preferable that the sheet resistance of the metal oxide film is higher than 100kΩ/sq. (kΩ/□). This is because even when a conductive pattern is formed on the glass sheet to form an antenna element, the variation in impedance of the antenna element can be cancelled substantially. When this solar control glass is used for a window of a vehicle, privacy inside the vehicle can be protected and the inflow of solar radiation is suppressed, but no radio disturbance is caused. When the glass sheet with a metal oxide film is used as the solar control glass, it is further preferable that the solar light transmittance is 30% or less.

Furthermore, it is preferable that, for instance, the glass sheet with a metal oxide film according to the present invention has a visible light transmittance in the range between 50% and 85%, a solar light transmittance (a solar radiation transmittance) in the range between 40% and 75%, and a normal emissivity at the surface, on which the metal oxide film is formed, of 0.20 or less. This glass sheet with a metal oxide film is suitable as solar control low-emissivity glass having both the solar control property and low emissivity and has characteristics suitable particularly for window glass of buildings. In addition, it is preferable that this glass sheet with a metal oxide film is used for a double-glazing unit. Specifically, the double-glazing unit includes two glass sheets positioned opposing each other via an inner layer selected from an air layer, an inert gas layer, and a reduced pressure layer. When the double-glazing unit includes the glass sheet with a metal oxide film as at least one of the two glass sheets, further excellent heat insulation can be obtained. When the glass sheet with a metal oxide film is used for the solar control low-emissivity glass, it is further preferable that the glass sheet with a metal oxide film has a visible light transmittance of at least 75% and a solar light transmittance of 68% or less.

It also is preferable that, for instance, the glass sheet with a metal oxide film of the present invention has a visible light transmittance in the range between 30% and 85% and the metal oxide film has a sheet resistance in the range between 5Ω/sq. and 10MΩ/sq. This glass sheet with the metal oxide film is suitable as antistatic glass and has characteristics suitable particularly for use as a display panel. When it is used as antistatic glass, it is further preferable that the metal oxide film has a sheet resistance of 1MΩ/sq. or less.

A method of manufacturing a glass sheet with a metal oxide film according to the present invention is characterized in that the metal oxide film in the above-mentioned glass sheet with a metal oxide film is formed by thermal decomposition (pyrolysis) of film forming materials on a glass ribbon in the manufacture of the glass sheet by a float glass process. Another method of manufacturing the glass sheet with a metal oxide film according to the present invention is characterized in that a layer containing tin oxide as the main component as the outermost layer containing antimony in the above-mentioned range is formed using a material gas substantially free from water vapor. By the formation using the gas containing substantially no water vapor, a coating film with a low haze ratio and an excellent appearance can be obtained.

## BRIEF DESCRIPTION OF DRAWINGS

FIG. 1 is a partial sectional view of an embodiment of a glass sheet with a metal oxide film according to the present invention.

FIG. 2 is a partial sectional view of an embodiment of a double-glazing unit according to the present invention.

## BEST MODE FOR CARRYING OUT THE INVENTION

Preferable embodiments of the glass sheet with a metal oxide film according to the present invention are described as follows.

First, the following description is directed to the metal oxide film.

At least the outermost layer of layers containing tin oxide as the main component is a tin oxide film containing fluorine (hereinafter also referred to as a "$SnO_2$:F film") or a tin oxide film containing antimony (hereinafter also referred to as a "$SnSbO_x$ film"). In the former film, the content of the fluorine is in the range between 0.5 wt% and 2 wt%, particularly at least 0.8 wt%. In the latter film, when the content of the antimony is indicated by a mole ratio of antimony to tin, the content of the antimony is in the range of $0.05 \leq Sb / Sn \leq 0.2$, particularly $Sb / Sn \geq 0.08$.

By allowing antimony and fluorine to be contained, the roughness at the film surface is reduced. However, when the content of the fluorine is less than 0.5 wt%, a sufficient effect of reducing the surface roughness cannot be obtained. On the other hand, when the content of the fluorine exceeds 2 wt%, the degree to which an effect of reducing the surface roughness is improved is decreased. Therefore, the further addition of the fluorine tends not to be worth the increase in material cost. Similarly, when the content of the antimony is indicated by a mole ratio to tin and is less than 0.05, a sufficient effect of reducing the surface roughness cannot be obtained. Likewise, the cost effective reduction in the roughness, i.e. with respect to the increase in material costs, may not be present when the mole ratio of antimony to tin exceeds 0.2.

To the $SnO_2$:F film or the $SnSbO_x$ film as the outermost layer, trace components other than antimony and fluorine may be added suitably. For instance, zinc, zirconium, iron, magnesium, titanium, vanadium, chromium, manganese, cobalt, nickel, copper, silicon, or the like may be added suitably. In addition, a film ($SnSbO_x$:F film) to which both fluorine and antimony are added may be used as the outermost layer. The aforementioned amounts of fluorine and antimony can apply even when both fluorine and antimony are present.

The thickness of the outermost layer is not particularly limited as long as the arithmetical mean roughness *Ra* is 10nm or less, preferably 7nm or less. However, it is preferable that the thickness is set to be 200nm or less, or further 50nm or less to suppress the crystal growth. In order to reduce the *Ra,* it is preferable that the thickness is particularly in the range between 20 nm and 50 nm.

It is preferred to allow an undercoating film to be placed between the outermost layer and the glass sheet. It is preferable that the undercoating film includes a layer containing silicon oxide as the main component. Sodium in the glass sheet reacts with a material gas or the like to produce salt. When crystal grows using this salt as a nucleus, the surface roughness increases. Therefore, the layer containing silicon oxide as the main component, which is effective as an alkaline barrier layer, is suitable for reducing the surface roughness. The specific structure of the undercoating film may be selected suitably according to intended characteristics. For example, a preferable undercoating film includes a layer containing tin oxide as the main component and a layer containing the silicon oxide as the main component that are formed in this order from the glass sheet side. When this undercoating film is used, desired optical characteristics and appearance tend to be obtained more easily.

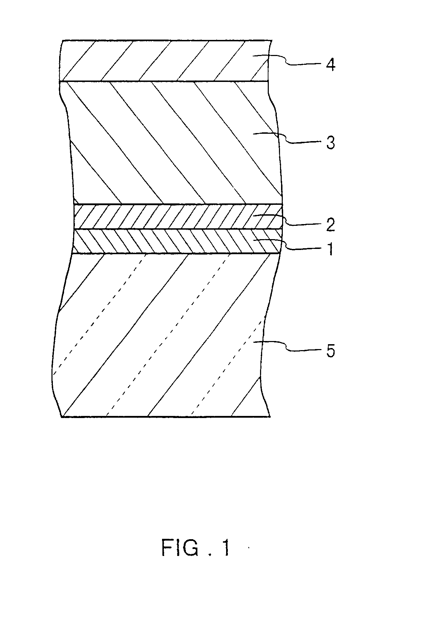

As shown in FIG. 1, a particularly preferable film as the undercoating film includes a first tin oxide containing layer 1 that contains tin oxide as the main component, a silicon oxide containing layer 2 that contains silicon oxide as the main component, and a second tin oxide containing layer 3 that contains tin oxide as the main component, which are formed sequentially from the glass sheet 5 side. As the glass sheet 5, a general soda-lime silica glass sheet can be used. In this case, it is preferable that the first tin oxide containing layer 1 has a thickness of 20 nm to 50 nm, the silicon oxide containing layer 2 a thickness of 10 nm to 50 nm, and the second tin oxide containing layer 3 a thickness of 20 nm to 500 nm.

To the layers containing tin oxide as the main component, which are used in the undercoating film, trace components such as antimony, fluorine, zinc, zirconium, iron, magnesium, titanium, vanadium, chromium, manganese, cobalt, nickel, copper, aluminum, silicon, or the like also may be added suitably for adjusting the color tone or performances with respect to visible light transmittance, solar control, emissivity, radio transmittance, conductivity, or the like. Particularly, in the structure shown in FIG. 1, it is preferred to add the trace components indicated above as examples, particularly at least one selected from fluorine, antimony, zinc, aluminum, zirconium, and silicon, to the second layer 3 adjacent to an outermost layer 4 to adjust various characteristics.

For example, the addition of fluorine or antimony increases the conductivity and decreases the visible light transmittance and solar light transmittance. The addition of zinc, aluminum, zirconium, or silicon increases the sheet resistance.

Preferable film structures of the metal oxide film are described as examples for the respective applications mentioned above as follows. The respective layers forming the metal oxide film are described sequentially from the glass sheet side with their preferable thickness ranges.

1. Solar Control Glass (for Vehicles)

| - First Layer | Layer containing tin oxide as the main component | 0 nm to 50 nm |
|---|---|---|
| - Second Layer | Layer containing silicon oxide as the main component | 0 nm to 50 nm |
| - Third Layer | Layer containing tin oxide as the main component and including zinc | 0 nm to 500 nm |
| - Fourth Layer (Outermost Layer) | Layer containing tin oxide as the main component and including fluorine and/or antimony | 10 nm to 200 nm |

The first to third layers are not essential, but it is preferred to form the respective layers. When they are formed, it is preferable that the first layer has a thickness of at least 20 nm, the second layer a thickness of at least 10 nm, and the third layer a thickness of at least 20 nm. Preferably, the concentration of the zinc (Zn) in the third layer is in the range of $0.1 \leq Zn / Sn \leq 0.7$ (mole ratio).

2. Solar Control Low-Emissivity Glass (for Buildings)

| - First Layer | Layer containing tin oxide as the main component | 0 nm to 50 nm |
|---|---|---|
| - Second Layer | Layer containing silicon oxide as the main component | 0 nm to 50 nm |
| - Third Layer | Layer containing tin oxide as the main component and including fluorine | 200 nm to 500 nm |
| - Fourth Layer (Outermost Layer) | Layer containing tin oxide as the main component and including fluorine and/or antimony | 10 nm to 50 nm |

The first and second layers are not essential, but it is preferred to form the respective layers. When they are formed, it is preferable that the first layer has a thickness of at least 20 nm and the second layer a thickness of at least 10 nm. Preferably, the concentration of the fluorine in the third layer is 0.05wt% to 0.5wt%.

3. Antistatic Glass (for Display Panels)

| - First Layer | Layer containing tin oxide as the main component | 0 nm to 50 nm |
|---|---|---|
| - Second Layer | Layer containing silicon oxide as the main component | 0 nm to 50 nm |
| - Third Layer | Layer containing tin oxide as the main component and including fluorine | 100 nm to 500 nm |
| - Fourth Layer (Outermost Layer) | Layer containing tin oxide as the main component and including fluorine and/or antimony | 10 nm to 50 nm |

The first and second layers are not essential, but it is preferred to form the respective layers. When they are formed, the lower limit of the thickness of the first and second layers and the preferable range of the concentration of the fluorine in the third layer are the same as in the case of the solar control low-emissivity glass.

In the glass sheet with a metal oxide film of the present invention, since the metal oxide film has a small surface roughness, the haze ratio can be suppressed to a level of 1 % or less. The haze ratio can be determined based on the following formula.

$$\text{Haze Ratio (\%) = [(Diffused Light Transmittance) / (Total Light Transmittance)]} \times 100$$

Next, a method of forming a metal oxide film on a glass sheet is described as follows.

The metal oxide film can be formed by various film forming methods such as a vacuum evaporation method, a sputtering method, an application method, or the like, which have been applied conventionally. However, when consideration is given to the productivity and coating film durability, a chemical vapor deposition method (a CVD method) or a spray method such as a solution spray method, a dispersion spray method, a powder spray method, or the like is preferable. In such a method, a film is formed by thermal decomposition of film forming materials.

In the CVD method, film forming vapor containing a compound to be a metal oxide film may be used. In the solution spray method, a solution containing a predetermined metallic compound may be sprayed on a high temperature glass sheet. In the dispersion spray method, a dispersion in which minute particles of a metallic compound are dispersed in a solution or a solvent is used instead of the above-mentioned solution. In the powder spray method, powders of a metallic compound may be used instead of the above-mentioned solution. In the spray method, a liquid in which respective components are premixed may be sprayed as fine droplets or powder or the respective components may be sprayed separately as droplets or powder at the same time to react with one another.

In the spray method, however, a uniform film thickness cannot be obtained easily due to the difficulty in controlling droplets to be sprayed or products to be exhausted such as a reaction product, an undecomposed product, or the like. In addition, considerable distortion occurs in the glass sheet. Therefore, the CVD method is superior overall.

When each metal oxide film is formed by the CVD method, generally, gaseous materials are supplied on a glass sheet that has been cut to have a predetermined size and has been heated. For example, while a glass sheet is placed on a mesh belt and is passed through a furnace, the materials are supplied and are allowed to react on the surface of the glass sheet with a high temperature, thus depositing the metal oxide film.

In order to omit the step of reheating the glass sheet once it has been cooled after being melted, it is preferred to deposit the metal oxide film on a glass ribbon with a high temperature by the CVD method using thermal energy in forming the glass sheet. Particularly, when the CVD method is carried out inside a float bath, a film can be deposited on a glass surface having a temperature equal to or higher than its softening point, thus improving the film performance, the film growth rate, and the film growth efficiency.

When a film is deposited on a glass ribbon in the float glass process, it is preferable that, for instance, a predetermined number of coaters are placed in a space at a predetermined distance from the surface of the glass ribbon moving inside a float bath or an annealing furnace, and gaseous materials are supplied from the coaters. When a plurality of coaters are used, a transparent conductive film with a plurality of stacked layers can be formed on the glass ribbon continuously.

The metal oxide film may be formed using both the CVD method and the spray method. For example, by using the CVD method and the spray method in this order (for instance, by depositing a film by the CVD method inside the float bath and forming a film by the spray method in the annealing furnace), predetermined stacked layers may be obtained.

Examples of materials used for forming the metal oxide film are described as follows.

Silicon materials used for depositing a film containing silicon oxide as the main component by the CVD method include silane (monosilane), disilane, trisilane, monochlorosilane, 1,2-dimethylsilane, 1,1,2-trimethyldisilane, 1,1,2,2-tetramethyl disilane, tetramethyl orthosilicate, tetraethyl orthosilicate, or the like. In this case, oxidation materials include oxygen, water vapor, dry air, carbon dioxide, carbon monoxide, nitrogen dioxide, ozone, or the like.

When silane is used, for the purpose of preventing the silane from reacting before reaching the glass surface and controlling the refractive index of the silicon oxide film, unsaturated hydrocarbon such as ethylene, acetylene, toluene, or the like may be added. In addition, when tetramethyl orthosilicate, tetraethyl orthosilicate, or the like is used, aluminium isopropoxide or the like may be added to improve the film growth rate.

Examples of tin materials used for depositing a film containing tin oxide as the main component by the CVD method include monobutyltin trichloride (MBTC), tin tetrachloride, dimethyltin dichloride, dibutyltin dichloride, dioctyltin dichloride, tetramethyltin, tetrabutyltin, dibutyltin diacetate, or the like. In this case, oxidation materials include oxygen, water vapor, dry air, or the like.

When antimony is to be added, antimony trichloride, antimony pentachloride, or the like may be used. When fluorine is to be added, hydrogen fluoride, trifluoroacetic acid, bromotrifluoromethane, chlorodifluoromethane, difluoromethane, or the like may be used. When zinc is to be added, bisacetylacetonato zinc, zinc dichloride, or the like may be used.

Examples of silicon materials used for forming a silicon oxide film by the spray method include tetramethyl orthosilicate, tetraethyl orthosilicate, or the like. In order to improve the film growth rate, acetylacetone zirconium or the like may be added.

Examples of tin materials used for forming a tin oxide film by the spray method include tin tetrachloride, dibutyltin dichloride, tetramethyltin, dioctyltin dichloride, dimethyltin dichloride, tetraoctyltin, dibutyltin oxide, dibutyltin dilaurate, dibutyltin fatty acid, monobutyltin fatty acid, monobutyltin trichloride, dibutyltin diacetate, dioctyltin dilaurate, or the like.

As the glass sheet, a general soda-lime glass sheet and a so-called heat-absorbing glass sheet to which a trace amount of coloring components is added may be used.

In such a manner as described above, a metal oxide film with an arithmetical mean roughness *Ra* of 10 nm or less is formed on the surface of a glass sheet. This glass sheet with the metal oxide film is processed according to its intended use and as required. Examples of such processes are described as follows.

For example, when it is used as vehicle window glass, it is preferred to carry out a bending process and/or a reinforcing (tempering) treatment on the glass sheet. In this case, the glass sheet with the metal oxide film is processed after being heated to a temperature around its softening point. For instance, the glass sheet is maintained inside a furnace at about 760°C for 2 minutes (glass temperature : 680°C), is press-formed so that the film on the glass sheet is positioned on a concave side (on the side toward the inside of a vehicle), and immediately after that, is tempered by air cooling, thus being processed to be a bent and tempered glass sheet.

For the purpose of radio transmission and reception, defogging, or the like, a conductive pattern may be formed on the surface of the glass sheet. The conductive pattern may be formed by printing a conductive paste in a predetermined pattern by a method such as silk screening or the like and baking it, as in a conventional method. As described above, when the sheet resistance of the metal oxide film is set to be higher than 100kΩ/sq., an excellent receiving state can be maintained even when the conductive pattern is formed as an antenna element on the metal oxide film.

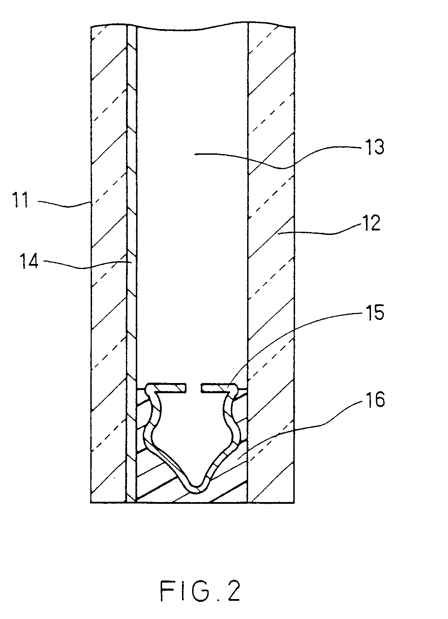

When being used in a double-glazing unit (FIG. 2), a glass sheet 11 with a metal oxide film may be placed opposing another glass sheet 12 with a film 14 facing an air layer 13, and in this state, a spacer 15 containing a desiccant may be placed between the glass sheets 11 and 12 at their peripheries, and then the glass sheets 11 and 12 may be bonded with a sealant 16. In this case, glass sheets with a metal oxide film may be used for both the glass sheets, and a reduced pressure layer may be formed by exhausting the air inside the air layer. Pressure reduction in the air layer further improves insulation effectiveness or the like. In this case, it is preferable that, for instance, the peripheries of the glass sheets are bonded using a low melting point glass and the spacer is placed at a predetermined space in the reduced pressure layer to maintain the interval between the glass sheets. Instead of the air layer, an inert gas layer in which an inert gas such as an argon gas is sealed may be used.

When the glass sheet with a metal oxide film is used as antistatic glass for display panels, further a film with a low refractive index or the like may be formed on the side of the glass sheet with a metal oxide film on which the metal oxide film is formed. When such a film is formed, an antireflection (AR) function is exhibited.

*Examples*

The present invention is described further in detail using examples as follows, but is not limited to the following examples.

First Example

Glass materials such as silica sand, soda ash, or the like were put into a furnace heated to 1500 to 1600°C to be melted therein and then were poured into a float bath. In the float bath, the molten glass is formed in a ribbon shape on molten tin to become a glass ribbon while traversing the length of the float bath, which moves downstream while maintaining its high temperature state at 600°C to 750°C.

Then, from coaters placed above the glass ribbon inside the float bath, film materials were supplied onto the glass ribbon and were decomposed by the heat of the glass ribbon, thus forming coating films. From a first coater on the furthest upstream side, monobutyltin trichloride diluted with nitrogen, oxygen and water were supplied to deposit a $SnO_2$ film with a thickness of 40 nm (a first layer). From a second coater, monosilane diluted with nitrogen, oxygen and ethylene as an additive were supplied onto the $SnO_2$ film to deposit a $SiO_2$ film with a thickness of 20 nm (a second layer). From a third coater, a mixed gas containing monobutyltin trichloride diluted with nitrogen, vapor of hydrogen fluoride, oxygen and water vapor was supplied onto the surface of the $SiO_2$ film to deposit a $SnO_2$:F film with a thickness of 400 nm (a third layer). From a fourth coater, a mixed gas containing monobutyltin trichloride diluted with nitrogen, antimony trichloride and oxygen was supplied onto the surface of the $SnO_2$:F film to deposit a $SnSbO_x$ film with a thickness of 25 nm (a fourth layer). After the deposition, the glass ribbon was annealed in an annealing furnace and was cut to have a predetermined size by a cutting device placed further downstream.

Thus, a glass sheet with a metal oxide film having a stacked structure of the glass sheet / the $SnO_2$ film / the $SiO_2$ film / the $SnO_2$:F film / the $SnSbO_x$ film was produced by a so-called on-line CVD method.

The third layer (the $SnO_2$:F film) had a fluorine concentration of 0.2 wt%, and in the fourth layer (the $SnSbO_x$ film), the Sb / Sn ratio (mole ratio) was 0.12. Furthermore, the glass sheet with a metal oxide film had a visible light transmittance of 78%, a solar light transmittance of 64%, and a normal emissivity at the coating film surface of 0.12.

Second Example

By the same method as in the first example except that the third layer was formed as a film with a thickness of 350 nm including zinc and containing tin oxide as the main component (hereinafter referred to as a "$SnO_2$:Zn film"), a glass sheet with a metal oxide film having a stacked structure of a glass sheet / a $SnO_2$ film / a $SiO_2$ film / a $SnO_2$:Zn film / a $SnSbO_x$ film was produced. In this case, from the third coater, a mixed gas containing monobutyltin trichloride diluted with nitrogen, vapor of bisacetylacetonato zinc, oxygen and water vapor was supplied onto the surface of the $SiO_2$ film to deposit the third layer.

The Zn/Sn ratio (mole ratio) in the third layer (the $SnO_2$:Zn film) was 0.5, and the Sb / Sn ratio (mole ratio) in the fourth layer (the $SnSbO_x$ film) was 0.12. In addition, the glass sheet with a metal oxide film had a visible light transmittance of 35%, a solar light transmittance of 30%, and a sheet resistance at the coating film surface of 1MΩ/sq.

Third Example

By the same method as in the first example except that the fourth layer was formed as a $SnO_2$:F film with a thickness of 25 nm, a glass sheet with a metal oxide film having a stacked structure of a glass sheet / a $SnO_2$ film / a $SiO_2$ film / a first $SnO_2$:F film / a second $SnO_2$:F film was produced. In this case, materials prepared by changing the ratio of the materials used for the third layer were supplied to form the fourth layer.

The fluorine concentration in the third layer (the first $SnO_2$:F film) was 0.2 wt%, and that in the fourth layer (the second $SnO_2$:F film) was 0.8 wt%. In addition, the glass sheet with a metal oxide film had a visible light transmittance of 78% and a sheet resistance at the coating film surface of 20Ω/sq.

Comparative Example 1

By the same method as in the first example except that the fourth layer was not provided, a glass sheet with a metal oxide film having a stacked structure of a glass sheet / a $SnO_2$ film / a $SiO_2$ film / a $SnO_2$:F film was produced.

Comparative Example 2

By the same method as in the second example except that the fourth layer was not provided, a glass sheet with a metal oxide film having a stacked structure of a glass sheet / a $SnO_2$ film / a $SiO_2$ film / a $SnO_2$:Zn film was produced.

Comparative Example 3

By the same method as in the first example except that the Sb / Sn ratio (mole ratio) in the fourth layer (the $SnSbO_x$ film) was set to be 0.02, a glass sheet with a metal oxide film having a stacked structure of a glass sheet / a $SnO_2$ film / a $SiO_2$ film / a $SnO_2$:F film / a $SnSbO_x$ film was produced.

Comparative Example 4

By the same method as in the first example except that water vapor was added to the material gas used for the deposition of the fourth layer (the $SnSbO_x$ film), a glass sheet with a metal oxide film having a stacked structure of a glass sheet / a $SnO_2$ film / a $SiO_2$ film / a $SnO_2$:F film / a $SnSbO_x$ film was produced.
At the surfaces of the coating films of the respective glass sheets with a metal oxide film, surface roughness was measured using a scanning electron microscope and an arithmetical mean roughness $Ra$ was calculated according to JIS B0601. The results are shown in Table 1. The results shown in Table 1 are mean values of the arithmetical mean roughness $Ra$ determined based on the measurement along the directions parallel to each other at a 1/51 μm spacing with respect to the coating film surface inside a 5-μm square. Haze ratios of the respective glass sheets with a metal oxide film were measured according to JIS K7105. The results are shown in Table 1.

Table 1

|  | $Ra$ (nm) | Haze Ratio(%) |
|---|---|---|
| First Example | 6.2 | 0.8 |
| Second Example | 5.0 | 0.4 |
| Third Example | 5.9 | 0.8 |
| Comparative Example 1 | 18 | 1.7 |
| Comparative Example 2 | 13 | 1.2 |
| Comparative Example 3 | 19 | 1.8 |
| Comparative Example 4 | 22 | 2.5 |

In the glass sheets with a metal oxide film obtained in the respective examples, every arithmetical mean roughness $Ra$ determined inside arbitrary 5-μm squares was less than 7 nm. In addition, since the haze ratio was lower than 1%, landscape or an image seen through the glass sheets did not look hazy. The glass sheets with a metal oxide film obtained in the first to third examples have preferable characteristics as solar control low-emissivity glass for buildings, solar control glass for vehicles, and antistatic glass for display panels, respectively.
On the contrary, the glass sheets with a metal oxide film obtained in the respective comparative examples have haze ratios higher than 1%. Furthermore, every arithmetical mean roughness $Ra$ exceeded 10 nm. In the comparative examples 1 to 3, fluorine or antimony is not contained in the outermost layer, or even if it is contained, its concentration is too low. In addition, in the comparative example 4, it is conceivable that the arithmetical mean roughness $Ra$ increased because the water vapor was contained in the mixed material gas. In the metal oxide film in the comparative example 4, so-called pinholes were caused.

INDUSTRIAL APPLICABILITY

As described above in detail, the present invention provides a glass sheet with a metal oxide film in which the roughness at the film surface is suppressed while layers containing tin oxide as the main component and having the thicknesses required for obtaining preferable characteristics with respect to the solar control property, low emissivity, conductivity, or the like are formed.

**Claims**

1. A glass sheet with a metal oxide film, comprising:

   a glass sheet; and
   a metal oxide film including at least one layer containing tin oxide as a main component, which is formed on a surface of the glass sheet,

   wherein a total thickness of the at least one layer containing tin oxide as the main component is at least 150 nm, a layer, of the at least one layer containing tin oxide as the main component, located furthest from the glass sheet contains fluorine, and a concentration of the fluorine in the layer is in a range between 0.5 wt% and 2 wt%, and an arithmetical mean roughness $Ra$ of a surface of the metal oxide film is 10 nm or less.

2. The glass sheet with a metal oxide film according to claim 1, wherein the layer located furthest from the glass sheet has a thickness in a range between 20 nm and 50 nm.

3. A glass sheet with a metal oxide film, comprising:

   a glass sheet; and
   a metal oxide film including at least one layer containing tin oxide as a main component, which is formed on a surface of the glass sheet,

   wherein a total thickness of the at least one layer containing tin oxide as the main component is at least 150 nm, a layer, of the at least one layer containing tin oxide as the main component, located furthest from the glass sheet contains antimony, when being indicated as a mole ratio (Sb / Sn) of the antimony (Sb) to tin (Sn), a concentration of the antimony in the layer is in a range of $0.05 \leq Sb / Sn \leq 0.2$, and has a thickness in a range between 20 nm and 50 nm, and an arithmetical mean roughness $Ra$ of a surface of the metal oxide film is 10 nm or less.

4. The glass sheet with a metal oxide film according to any one of claims 1 to 3, wherein the glass sheet with a metal oxide film has a visible light transmittance in a range between 15% and 55% and a solar light transmittance in a range between 10% and 50%, and a sheet resistance of the metal oxide film is higher than 100 kΩ/sq.

5. The glass sheet with a metal oxide film according to claim 4, further comprising a conductive pattern formed to be an antenna element.

6. The glass sheet with a metal oxide film according to any one of claims 1 to 3, wherein the glass sheet with a metal oxide film has a visible light transmittance in a range between 50% and 85%, a solar light transmittance in a range between 40% and 75%, and a normal emissivity of the surface on which the metal oxide film is formed of 0.20 or lower.

7. A double-glazing unit, comprising:

   two glass sheets; and
   an inner layer selected from an air layer, an inert gas layer, and a reduced pressure layer,
   the two glass sheets being positioned so as to oppose each other via the inner layer,

   wherein at least one of the two glass sheets is a glass sheet with a metal oxide film according to claim 6.

8. The glass sheet with a metal oxide film according to any one of claims 1 to 3, wherein the glass sheet with a metal oxide film has a visible light transmittance in a range between 30% and 85%, and a sheet resistance of the metal oxide film is in a range between 5 Ω/sq. and 10 MΩ/sq.

9. A method of manufacturing a glass sheet with a metal oxide film including a glass sheet and a metal oxide film including at least one layer containing tin oxide as a main component, which is formed on a surface of the glass sheet,
a total thickness of the at least one layer containing tin oxide as the main component being at least 150 nm,
a layer, of the at least one layer containing tin oxide as the main component, located furthest from the glass sheet containing fluorine,
wherein a concentration of the fluorine in the layer is in a range between 0.5 wt% and 2 wt%, and
an arithmetical mean roughness *Ra* of a surface of the metal oxide film being 10 nm or less,
wherein the metal oxide film is formed by thermal decomposition of film forming materials on a glass ribbon in the manufacture of the glass sheet by a float glass process.

10. A method of manufacturing a glass sheet with a metal oxide film including a glass sheet and a metal oxide film including at least one layer containing tin oxide as a main component, which is formed on a surface of the glass sheet,
a total thickness of the at least one layer containing tin oxide as the main component being at least 150 nm,
a layer, of the at least one layer containing tin oxide as the main component that is located furthest from the glass sheet containing antimony,
wherein when being indicated as a mole ratio (Sb / Sn) of the antimony (Sb) to tin (Sn), a concentration of the antimony in the layer being in a range of $0.05 \leq Sb / Sn \leq 0.2$, and the layer has a thickness in a range between 20 nm and 50 nm, and
an arithmetical mean roughness *Ra* of a surface of the metal oxide film being 10 nm or less, and
the layer located furthest from the glass sheet is formed with a material gas substantially free from water vapor.

11. A method of manufacturing a glass sheet with a metal oxide film including a glass sheet and a metal oxide film including at least one layer containing tin oxide as a main component, which is formed on a surface of the glass sheet,
a total thickness of the at least one layer containing tin oxide as the main component being at least 150 nm,
a layer, of the at least one layer containing tin oxide as the main component, located furthest from the glass sheet containing antimony,
wherein when being indicated as a mole ratio (Sb / Sn) of the antimony (Sb) to tin (Sn), a concentration of the antimony in the layer is in a range of $0.05 \leq Sb / Sn \leq 0.2$, and the layer has a thickness in a range between 20 nm and 50 nm, and
an arithmetical mean roughness *Ra* of a surface of the metal oxide film being 10 nm or less,
wherein the metal oxide film is formed by thermal decomposition of film forming materials on a glass ribbon in the manufacture of the glass sheet by a float glass process.

12. The glass sheet with a metal oxide film according to claim 1, wherein a concentration of the fluorine in the layer is in a range between 0.8 wt% and 2 wt%.

13. The glass sheet with a metal oxide film according to claim 1 or 3, wherein the metal oxide film includes a layer that contains tin oxide as a main component and includes zinc.

14. The glass sheet with a metal oxide film according to claim 1 or 3, wherein the arithmetical mean roughness *Ra* is 7 nm or less.

**Patentansprüche**

1. Glassscheibe mit einer Metalloxidschicht, die aufweist eine Glasscheibe und
eine Metalloxidschicht, die mindestens eine Lage mit Zinnoxid als Hauptkomponente enthält, und die auf einer Oberfläche der Glassscheibe gebildet ist,
wobei die Gesamtdicke der zumindest einen Zinnoxid als Hauptkomponente enthaltenden Lage mindestens 150 nm beträgt, eine der zumindest einen Zinnoxid als Hauptkomponente enthaltende Lage, die am weitesten von der Glasscheibe entfernt liegt, Fluor enthält, und die Fluorkonzentration in dieser Lage in einem Bereich zwischen 0,5 und 2 Gew.-% liegt, und eine arithmetische mittlere Rauheit Ra einer Oberfläche der Metalloxidschicht 10 nm oder weniger beträgt.

2. Glassscheibe mit einer Metalloxidschicht nach Anspruch 1, bei der die am weitesten von der Glasscheibe entfernt liegende Lage eine Dicke in einem Bereich zwischen 20 und 50 nm aufweist.

3. Glasscheibe mit einer Metalloxidschicht, die aufweist:

eine Glasscheibe und
eine Metalloxidschicht, die zumindest eine Lage mit Zinnoxid als Hauptkomponente enthält, und die auf einer Oberfläche der Glasscheibe ausgebildet ist,

wobei eine Gesamtdicke der zumindest einen Lage, die Zinnoxid als Hauptkomponente enthält, mindestens 150 nm beträgt, eine der zumindest einen Lage, die Zinnoxid als Hauptkomponente enthält, und die am weitesten von der Glasscheibe entfernt liegt, Antimon enthält, wobei bei Angabe eines Molverhältnisses (Sb/Sn) von Antimon (Sb) zu Zinn (Sn) die Konzentration von Antimon in der Lage in einem Bereich von $0,05 \leq Sb/Sn \leq 0,2$ liegt, die Dicke in einem Bereich zwischen 20 nm und 50 nm liegt und die arithmetische mittlere Rauheit Ra einer Oberfläche der Metalloxidschicht 10 nm oder weniger beträgt.

4. Glasscheibe mit einer Metalloxidschicht nach einem der Ansprüche 1 bis 3, bei der die Glasscheibe mit einer Metalloxidschicht einen Transmissionsgrad für sichtbares Licht im Bereich zwischen 15 und 55 %, einen Transmissionsgrad für Sonnenlicht im Bereich zwischen 10 und 50 % besitzt und der Schichtwiderstand der Metalloxidschicht höher als 100 kΩ/sq. ist.

5. Glasscheibe mit einer Metalloxidschicht nach Anspruch 4, die weiterhin ein Leiterbild aufweist, das als Antennenelement ausgebildet ist.

6. Glasscheibe mit einer Metalloxidschicht nach einem der Ansprüche 1 bis 3, bei der die Glasscheibe mit der Metalloxidschicht einen Transmissionsgrad für sichtbares Licht im Bereich zwischen 50 und 85 %, für Sonnenlicht im Bereich zwischen 40 und 75 % und einen normalen Emissionsgrad der Oberfläche, auf der die Metalloxidschicht gebildet ist, von 0,20 oder weniger aufweist.

7. Doppelverglasungseinheit mit
zwei Glasscheiben und mit
einer Innenlage, ausgewählt aus einer Luftlage, einer Inertgaslage und einer Niederdrucklage,
wobei die beiden Glasscheiben derart angebracht sind, dass sie sich über die Innenlage gegenüberliegen, und wobei zumindest eine der beiden Glasscheiben eine Glasscheibe mit einer Metalloxidschicht nach Anspruch 6 ist.

8. Glasscheibe mit einer Metalloxidschicht nach einem der Ansprüche 1 bis 3, bei der die Glasscheibe mit der Metalloxidschicht einen Transmissionsgrad für sichtbares Licht im Bereich zwischen 30 und 85 % und einen Schichtwiderstand der Metalloxidschicht in einem Bereich zwischen 5 Ω/sq. und 10 MΩ/sq. aufweist.

9. Verfahren zur Herstellung einer Glasscheibe mit einer Metalloxidschicht, die aufweist
eine Glasscheibe und
eine Metalloxidschicht, die mindestens eine Lage mit Zinnoxid als Hauptkomponente enthält, und die auf einer Oberfläche der Glasscheibe gebildet ist,
wobei die Gesamtdicke der zumindest einen Zinnoxid als Hauptkomponente enthaltenden Lage mindestens 150 nm beträgt, eine der zumindest einen Zinnoxid als Hauptkomponente enthaltende Lage, die am weitesten von der Glasscheibe entfernt liegt, Fluor enthält, und die Fluorkonzentration in dieser Lage in einem Bereich zwischen 0,5 und 2 Gew.-% liegt, und eine arithmetische mittlere Rauheit Ra einer Oberfläche der Metalloxidschicht 10 nm oder weniger beträgt,
wobei bei diesem Verfahren die Metalloxidschicht durch thermische Zersetzung schichtbildender Materialien auf einem Glasband bei der Herstellung der Glasscheibe durch ein Floatglasverfahren gebildet wird.

10. Verfahren zur Herstellung einer Glasscheibe mit einer Metalloxidschicht, die aufweist:

eine Glasscheibe und
eine Metalloxidschicht, die zumindest eine Lage mit Zinnoxid als Hauptkomponente enthält, und die auf einer Oberfläche der Glasscheibe ausgebildet ist,

wobei eine Gesamtdicke der zumindest einen Lage, die Zinnoxid als Hauptkomponente enthält, mindestens 150 nm beträgt, eine der zumindest einen Lage, die Zinnoxid als Hauptkomponente enthält, und die am weitesten von der Glasscheibe entfernt liegt, Antimon enthält, wobei bei Angabe eines Molverhältnisses (Sb/Sn) von Antimon (Sb) zu Zinn (Sn) die Konzentration von Antimon in der Lage in einem Bereich von 0,05≤Sb/Sn≤0,2 liegt, die Dicke in einem Bereich zwischen 20 nm und 50 nm liegt und die arithmetische mittlere Rauheit *Ra* einer Oberfläche der Metalloxidschicht 10 nm oder weniger beträgt, und wobei
die am weitesten von der Glasscheibe entfernt liegende Lage mit einem materiellen Gas, das im Wesentlichen frei ist von Wasserdampf, gebildet wird.

**11.** Verfahren zur Herstellung einer Glasscheibe mit einer Metalloxidschicht, die aufweist:

eine Glasscheibe und
eine Metalloxidschicht, die zumindest eine Lage mit Zinnoxid als Hauptkomponente enthält, und die auf einer Oberfläche der Glasscheibe ausgebildet ist,

wobei eine Gesamtdicke der zumindest einen Lage, die Zinnoxid als Hauptkomponente enthält, mindestens 150 nm beträgt, eine der zumindest einen Lage, die Zinnoxid als Hauptkomponente enthält, und die am weitesten von der Glasscheibe entfernt liegt, Antimon enthält, wobei bei Angabe eines Molverhältnisses (Sb/Sn) von Antimon (Sb) zu Zinn (Sn) die Konzentration von Antimon in der Lage in einem Bereich von 0,05≤Sb/Sn≤0,2 liegt, die Dicke in einem Bereich zwischen 20 nm und 50 nm liegt und die arithmetische mittlere Rauheit Ra einer Oberfläche der Metalloxidschicht 10 nm oder weniger beträgt,
wobei bei diesem Verfahren die Metalloxidschicht durch thermische Zersetzung schichtbildender Materialien auf dem Glasband bei der Herstellung der Glasscheibe durch ein Floatglasverfahren gebildet wird.

**12.** Glasscheibe mit einer Metalloxidschicht nach Anspruch 1, bei der eine Fluorkonzentration in der Lage in einem Bereich zwischen 0,8 und 2 Gew.-% liegt.

**13.** Glasscheibe mit einer Metalloxidschicht nach Anspruch 1 oder 3, bei der die Metalloxidschicht eine Lage enthält, die Zinnoxid als Hauptkomponente sowie Zink enthält.

**14.** Glasscheibe mit einer Metalloxidschicht nach Anspruch 1 oder 3, bei der die arithmetische mittlere Rauheit Ra 7 nm oder weniger beträgt.

**Revendications**

**1.** Feuille de verre à film d'oxyde métallique, comprenant:

une feuille de verre; et
un film d'oxyde métallique comprenant au moins une couche contenant de l'oxyde d'étain comme composant principal, qui est formée sur une surface de la feuille de verre,

dans laquelle une épaisseur totale de la au moins une couche contenant de l'oxyde d'étain comme composant principal est d'au moins 150 nm, une couche, de la au moins une couche contenant de l'oxyde d'étain comme composant principal, la plus éloignée de la feuille de verre, contient du fluor, la concentration de fluor dans la couche étant comprise entre 0,5 % en poids et 2 % en poids, et présentant une rugosité moyenne arithmétique Ra d'une surface du film d'oxyde métallique égale à 10 nm ou moins.

**2.** Feuille de verre à film d'oxyde métallique suivant la revendication 1, dans laquelle la couche la plus éloignée de la feuille de verre présente une épaisseur comprise entre 20 nm et 50 nm.

**3.** Feuille de verre à film d'oxyde métallique, comprenant:

une feuille de verre; et
un film d'oxyde métallique comprenant au moins une couche contenant de l'oxyde d'étain comme composant principal, qui est formée sur une surface de la feuille de verre,

dans laquelle une épaisseur totale de la au moins une couche contenant de l'oxyde d'étain comme composant principal est d'au moins 150 nm, une couche, de la au moins une couche contenant de l'oxyde d'étain comme composant principal, la plus éloignée de la feuille de verre, contient de l'antimoine, et dans laquelle, lorsqu'elle est indiquée comme un rapport molaire (Sb/Sn) de l'antimoine (Sb) à l'étain (Sn), une concentration de l'antimoine dans la couche est comprise dans la gamme de $0,05 \leq Sb/Sn \leq 0,2$, et présente une épaisseur comprise entre 20 nm et 50 nm, et une rugosité arithmétique moyenne Ra d'une surface du film d'oxyde métallique égale à 10 nm ou moins.

4. Feuille de verre à film d'oxyde métallique suivant l'une quelconque des revendications 1 à 3, dans laquelle la feuille de verre à film d'oxyde métallique présente une transmission de lumière visible comprise entre 15 % et 55 %, et une transmission de lumière solaire comprise entre 10 % et 50 %, et une résistance de feuille du film d'oxyde métallique supérieure à 100 kΩ/sq.

5. Feuille de verre à film d'oxyde métallique suivant la revendication 4, comprenant en outre un motif conducteur formé de manière à faire office d'élément d'antenne.

6. Feuille de verre à film d'oxyde métallique suivant l'une quelconque des revendications 1 à 3, dans laquelle la feuille de verre à film d'oxyde métallique présente une transmission de lumière visible comprise entre 50 % et 85 %, et une transmission de lumière solaire comprise entre 40 % et 75 %, et une émissivité normale de la surface sur laquelle le film d'oxyde métallique est formé égale à 0,20 ou moins.

7. Unité à double vitrage, comprenant:

   deux feuilles de verre; et
   une couche intérieure sélectionnée parmi une couche d'air, une couche de gaz inerte et une couche à pression réduite,
   les deux feuilles de verre étant positionnées de manière à être mutuellement opposées par l'intermédiaire de la couche intérieure,

   dans laquelle au moins une des deux feuilles de verre est une feuille de verre à film d'oxyde métallique suivant la revendication 6.

8. Feuille de verre à film d'oxyde métallique suivant l'une quelconque des revendications 1 à 3, dans laquelle la feuille de verre à film d'oxyde métallique présente une transmission de lumière visible comprise entre 30 % et 85 %, et une résistance de feuille du film d'oxyde métallique comprise entre 5 Ω/sq. et 10 Ω/sq.

9. Procédé de fabrication d'une feuille de. verre à film d'oxyde métallique comprenant une feuille de verre et un film d'oxyde métallique comprenant au moins une couche contenant de l'oxyde d'étain comme composant principal, qui est formée sur une surface de la feuille de verre,
   une épaisseur totale de la au moins une couche contenant de l'oxyde d'étain comme composant principal étant égale à au moins 150 nm,
   une couche, de la au moins une couche contenant de l'oxyde d'étain comme composant principal, la plus éloignée de la feuille de verre, contenant du fluor,
   dans lequel une concentration de fluor dans la couche est comprise entre 0,5 % en poids et 2 % en poids, et
   une rugosité moyenne arithmétique *Ra* d'une surface du film d'oxyde métallique est égale à 10 nm ou moins,
   dans lequel le film d'oxyde métallique est formé par une décomposition thermique des matières de formation du film sur un ruban de verre lors de la fabrication du verre par un procédé de verre flotté.

10. Procédé de fabrication d'une feuille de verre à film d'oxyde métallique comprenant une feuille de verre et un film d'oxyde métallique comprenant au moins une couche contenant de l'oxyde d'étain comme composant principal, qui est formée sur une surface de la feuille de verre,
    une épaisseur totale de la au moins une couche contenant de l'oxyde d'étain comme composant principal étant égale à au moins 150 nm,
    une couche, de la au moins une couche contenant de l'oxyde d'étain comme composant principal, la plus éloignée de la feuille de verre, contenant de l'antimoine,
    dans lequel, lorsqu'elle est indiquée comme le rapport molaire (Sb/Sn) de l'antimoine (Sb) à l'étain (Sn), une concentration de l'antimoine dans la couche est comprise dans la gamme de $0,05 \leq Sb/Sn \leq 0,2$, et présente une épaisseur comprise entre 20 nm et 50 nm, et

une rugosité arithmétique moyenne Ra d'une surface du film d'oxyde métallique égale à 10 nm ou moins, et dans lequel la couche la plus éloignée de la feuille de verre est constituée d'une matière gazeuse substantiellement exempte de vapeur d'eau.

11. Procédé de fabrication d'une feuille de verre à film d'oxyde métallique comprenant une feuille de verre et un film d'oxyde métallique comprenant au moins une couche contenant de l'oxyde d'étain comme composant principal, qui est formée sur une surface de la feuille de verre,

une épaisseur totale de la au moins une couche contenant de l'oxyde d'étain comme composant principal étant égale à au moins 150 nm,

une couche, de la au moins une couche contenant de l'oxyde d'étain comme composant principal, la plus éloignée de la feuille de verre, contenant de l'antimoine,

dans lequel, lorsqu'elle est indiquée comme le rapport molaire (Sb/Sn) de l'antimoine (Sb) à l'étain (Sn), une concentration de l'antimoine dans la couche est comprise dans la gamme de $0,05 \leq Sb/Sn \leq 0,2$, et présente une épaisseur comprise entre 20 nm et 50 nm, et

une rugosité arithmétique moyenne Ra d'une surface du film d'oxyde métallique égale à 10 nm ou moins,

dans lequel le film d'oxyde métallique est formé par une décomposition thermique des matières de formation du film sur un ruban de verre lors de la fabrication du verre par un procédé de verre flotté.

12. Feuille de verre à film d'oxyde métallique suivant la revendication 1, dans laquelle une concentration de fluor dans la couche est comprise entre 0,8 % en poids et 2 % en poids.

13. Feuille de verre à film d'oxyde métallique suivant la revendication 1 à 3, dans laquelle le film d'oxyde métallique comprend une couche qui contient de l'oxyde d'étain comme composant principal et comprend du zinc.

14. Feuille de verre à film d'oxyde métallique suivant la revendication 1 à 3, dans laquelle la rugosité moyenne arithmétique Ra est égale à 7 nm ou moins.

FIG . 1

FIG.2